# EUROPÄISCHE PATENTSCHRIFT

(11) **EP 1 338 773 B1**
(45) Veröffentlichungstag und Bekanntmachung des Hinweises auf die Patenterteilung: **11.03.2009**
(21) Anmeldenummer: 03003857.4
(22) Anmeldetag: 02.04.1997
(51) Int. Cl.: F02C 3/05, F01D 9/04, F24F 5/00, F02C 6/00, F02C 1/04

(54) **Gasturbinenanordnung zur Luftkonditionierung**
Gas turbine assembly for air conditioning
Arrangement d'une turbine à gaz pour le conditionnement d'air

(30) Priorität: 04.04.1996 DE 19613781; 31.07.1996 DE 19630792
(43) Veröffentlichungstag der Anmeldung: 27.08.2003
(62) Teilanmeldung aus: 97918101.3
(73) Patentinhaber: Jung, Nadine, 8303 Bassersdorf (CH)
(72) Erfinder: Jung, Nadine, 8303 Bassersdorf (CH)
(74) Vertreter: Stoffregen, Hans-Herbert

(56) Entgegenhaltungen:
- EP-A- 0 151 436
- EP-A- 0 554 544
- EP-A- 0 738 655
- FR-A- 1 304 701
- GB-A- 774 415
- GB-A- 2 237 372
- US-A- 2 409 159
- US-A- 3 739 572
- US-A- 3 955 360
- US-A- 4 312 191
- US-A- 5 101 620

## Beschreibung

Die Erfindung bezieht sich auf eine Anordnung zum Konditionieren von Luft umfassend eine erste Turbine sowie einen ersten Verdichter, die von einer gemeinsamen ersten Welle ausgehen.

Die US-A-4,312,191 offenbart eine Anordnung mit einem Elektromotor, von dessen Welle ein Verdichter ausgeht Die von dem Verdichter stammende verdichtete Luft wird einer Luftkonditioniereinrichtung zugeführt, die von der Welle des Elektromotors ausgeht.

Die EP-A-0738 655 bezieht sich auf eine klassische Klimaanlage.

Eine Konditioniereinrichtung ist der US-A-2,409,159 zu entnehmen, bei der auf einer Welle zwei Turbinen sowie ein Verdichter angeordnet sind. Die von dem Verdichter stammende verdichtete Luft strömt durch einen Wärmetauscher.

Die GB-A-2 237 372 sieht eine Luftkonditioniereinrichtung vor, die mittels eines Motors mit hoher Drehzahl angetrieben wird.

Eine Klimatisierungsvorrichtung für insbesondere Kraftfahrzeuge ist aus der EP-A-0 151 436 bekannt.

Die GB-A-774 415 schlägt eine Luftkonditioniereinrichtung vor, die eine Turbinen-Verdichter-Einbeit vorsieht, die von einer gemeinsamen Welle ausgehen.

Nach der FR-A-1 304 701 wird eine Turbine über einen Elektromotor angetrieben, der mit der das Laufrad der Turbine aufnehmenden Welle verbunden ist.

Ein Turbolader bzw. eine Turbinenkompressoreinheit sind der US-A-3,739,572 bzw. der US-A-5,101,620 zu entnehmen.

Ein Abgasturbolader nach der EP-A- 0 554 544 ist über eine Schaltkupplung und ein Planetengetriebe mit einer Hydrostatmaschine verbunden.

Der US-A-3,955,360 sind spezielle Ausbildungen von Turbinenschaufeln zu entnehmen.

Der Erfindung liegt u. a. das Problem zugrunde, eine Anordnung zur Luftkonditionierung mit einfachem und kostengünstigem Aufbau zur Verfügung zu stellern. Dabei soll eine autarke Einheit zur Verfügung gestellt werden, die modulartig, schnell und einfach an unterschiedliche Arbeitsmaschinen angekuppelt werden kann.

Erfindungsgemäß wird die Aufgabe im Wesentlichen dadurch gelöst, dass der Rotor des ersten Verdichters und das Laufrad der ersten Turbine nebeneinander auf derselben Welle angeordnet sind, dass auf der Welle ein Generator angeordnet ist, dass die aus der ersten Turbine, dem ersten Verdichter und dem Generator bestehende Einheit ausschließlich über, zwei Lagerstellen gelagert ist und dass der Generator als Starter der Anordnung verwendbar ist, wobei der Verdichter über einen Wärmetauscher mit einer auf der Welle angeordneten zweiten Turbine verbunden ist oder auf der ersten Welle ein zweiter Verdichter und eine weitere Turbine angeordnet sind, wobei der erste Verdichter mit der zweiten Turbine oder der zweite Verdichter mit der weiteren Turbine über einen Wärmetauscher verbunden sind.

Insbesondere ist vorgesehen, daß der zweiten Turbine Zapfluft der Verdichter-TurbinenAnordnung zuführbar ist. oder daß der weiteren Turbine von auf der Welle gelagertem weiteren Verdichter komprimierte Luft zuführbar ist.

Eine besonders hervorzuhebende Ausgestaltung bezieht sich auf eine Anordnung zum Konditionieren von Luft, die sich dadurch auszeichnet, daß eine Turbinen-Verdichter-Anordnung auf einer Welle gelagert ist, daß verdichtete Luft des Verdichters über einen Wärmetauscher der Turbine zuführbar ist und daß die Welle über ein Untersetzungsgetriebe mit einer weiteren antreibbaren Welle verbunden ist.

Dabei kann das Untersetzungsgetriebe ein zwischen oder außerhalb von zwei Lagern der Welle gelagertes Planetengetriebe sein, von dessen Glockenrad die zweite Welle ausgeht, mit der eine Pumpe und/oder ein Ventilator verbindbar ist, wobei die zweite Welle gleichachsig mit der Welle verläuft.

Ferner kann die weitere Welle über einen Diesel-, Otto- oder Elektromotor oder eine Gasturbineneinheit antreibbar sein.

Das Untersetzungsgetriebe ist ein Planetengetriebe, dessen Glockenrad von der mit dem Antriebsaggregat verbindbaren weiteren Welle ausgeht, die ihrerseits gleichachsig zu der Welle der Turbokompressoreinheit verläuft.

Das Problem wird bei einer Gasturbinenanordnong bzw. -einheit mit einem Verdichter dadurch gelöst, dass der Rotor des Verdichters und ein Turbinenlaufrad nebeneinander auf derselben Welle angeordnet sind, daß die Welle der Gasturbine mit einem Untersetzungsgetriebe verbunden ist, daß die Gasturbine und/oder das Untersetzungsgetriebe ausschließlich auf zwei Lagerstellen gelagert sind, und daß auf der Anschlußseite der Gasturbineneinheit für anzutreibende Maschinen ein Bund für ein V-Profil-Spannband vorgesehen ist, mit dem die Verbindung zum Gehäuse der anzutreibenden Maschine bestellbar ist.

Es ist vorgesehen, dass insbesondere der einstückige Rotor mit den Verdichter- und Turbinenlaufschaufeln fliegend gelagert ist, wobei die Lagerung auf der Verdichterseite vorgesehen ist. Die Lagerung befindet sich hierbei außerhalb der Zonen mit hohen Temperaturen, d.h. auf der Abtriebsseite. Dies bedeutet, daß die Lager einfacher ausgebildet sein können, da beispielsweise keine aufwendige Kühlung notwendig ist. Die Welle ist mit einem Untersetzungsgetriebe verbunden.

Als Untersetzungsgetriebe ist insbesondere ein Planetengetriebe vorgesehen, dessen Sonnenrad mit dem Rotor der Turbine auf einer gemeinsamen Welle angeordnet ist. Mit dieser Ausgestaltung lassen sich Lager einsparen, d.h. der Rotor und das Getriebe kommen mit jeweils zwei Lagerstellen aus. An einem Rand des die Gasturbine umgebenden Gechäuses ist ein Wulst für die Befestigung an einer stirnseitigen Platte, die die Platte mit den Diffusor- und Turbinerleitschaufeln und das doppelwandige Gehäuses trägt, mittels eines V-Profil-Spannbandes vorgesehen. Derartige Spannbänder sind kommerziell, z.B. von der Fa. Smith & Johnson (Keighley) Ltd., verfügbar. Das Turbinengehäuse kann bei dieser Ausführungsform in sehr kurzer Zeit entfernt werden, wodurch die Sicht auf die innen angeordneten Turbinenteile freigegeben wird. Hierdurch wird die Wartung und Inspektion erleichtert.

Es ist vorgesehen, daß radial außen am Rotor des Verdichters angeordnete Diffusorschaufeln auf einer Seite einer Platte und Turbinenleitschaufeln auf der anderen Seite der Platte angeordnet sind und daß Öffnungen in der Platte angeordnet sind, die in Kühlkanälen bzw. Hohlräumen in den Turbinenleitschaufeln münden.

Bei der erfindungsgemäßen Gasturbine können der Verdichterrotor und der Turbinenrotor in kurzem Abstand voneinander angeordnet sein, da die Platte/Leitschaufelring eine kompakte Bauweise begünstigt. Hierdurch läßt sich eine erhebliche Reduzierung des Turbinengewichts erreichen. Insbesondere sind der Turbinenrotor und der Verdichterrotor einstückig ausgebildet. Der Herstellungsaufwad läßt sich hierdurch wesentlich vermindern.

Weitere Einzelheiten, Merkmale und Vorteile der Erfindung ergeben sich nicht nur aus den Ansprüchen - für sich und/oder in Kombination -, sondern auch aus der nachfolgenden Beschreibung von in einer Zeichnung dargestellten bevorzugten Ausführungsbeispielen.

Es zeigen:
- Fig. 1: eine Gasturbineneinheit in Seitenansicht, teilweise im Schnitt,
- Fig. 2: einen Ausschnitt der Gasturbineneinheit gemäß Fig. 1 mit Details,
- Fig. 3: einen Abschnitt einer Platte mit Verdichter- und Turbinenleitschaufeln in Seitenansicht,
- Fig.4: einen Schnitt längs der Linien I-1 der in Fig. 3 dargestellten Platte mit Verdichter, und Turbinenleitschaufeln,
- Fig. 5: ein Teil einer Platte zwischen Verdichter- und Turbinenteil und einer der Gehäusewände im Querschnitt,
- Fig. 6: eine andere Ausführungsform einer Platte mit Verdichter- und Turbinenleitschaufeln in Seitenansicht,
- Fig. 7: eine weitere Ausführungsform einer Platte mit Verdichter- und Turbinenleitschaufeln in Seitenansicht,
- Fig. 8: ein Aggregat aus einer Gasturbineneinheit in Kombination mit einem elektrischen Generator und einer von einem elektrischen Motor angetriebenen Turbinen-Verdichtungseinheit schematisch, teilweise im Schnitt,
- Fig.9: eine Gasturbineneinheit mit Hilfsaggregaten für die Gasturbine und einer Schnellbefestigungseinrichtung für die Verbindung mit Getrieben bzw. Drehmomentwandlem in Seitenansicht,
- Fig. 10: ein Aggregat aus einer Gasturbineneinheit, einem elektrischen Generator und einer Verdichter- Turbineneinheit für Luft schematisch im Längsschnitt,
- Fig. 11: ein Aggregat aus einer Gasturbine, einer elektrischen Maschine und einer Turbinenstufe, der Zapfluft von der Verdichterstufe über einen Wärmetauscher zugeführt wird, schematisch im Längsschnitt,
- Fig. 12: ein Aggregat für den Antrieb mit einem ankuppelbaren Motor mit einem Verdichter und einem Getriebe im Längsschnitt,
- Fig. 13: ein Aggregat mit einer Turbine, einem Getriebe, einem Verdichter und Hilfsaggregaten im Längsschnitt.

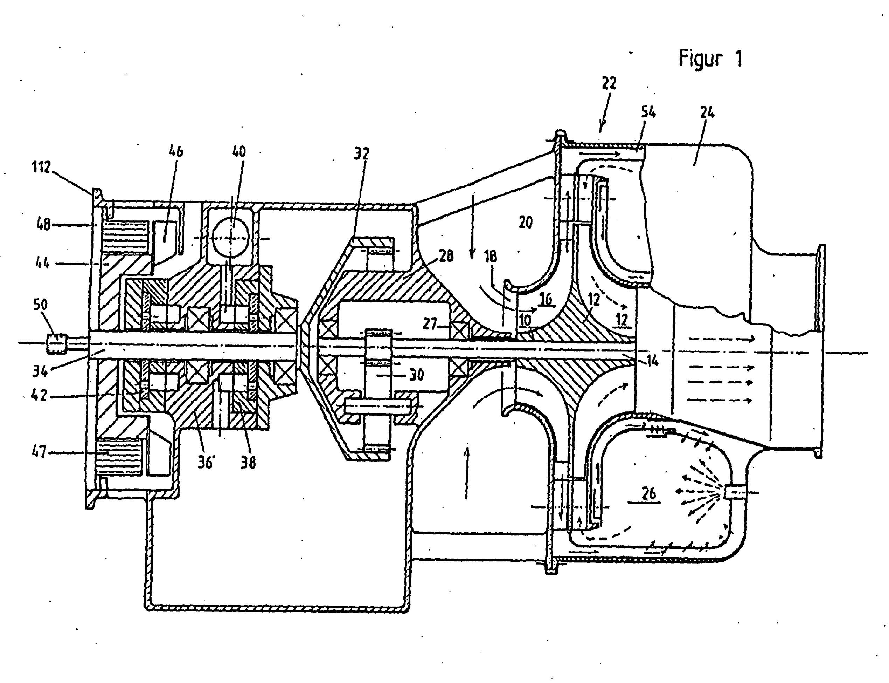

In Fig. 1 ist in Seitenansicht, teilweise im Schnitt, ein Nebenstrom-Gasturbinenaggregat, das ein Verdichterlaufrad 10 und ein Turbinenlaufrad 12 enthält, dargestellt. Das Verdichterlaufrad 10 und das Turbinenlaufrad 12 sind nebeneinander auf der gleichen Welle 14 angeordnet. Insbesondere sind das Turbinenlaufrad 12 und das Verdichterlaufrad 10 einstückig ausgebildet in Form eines Turbinenrotors. Das Verdichtungslaufrad 10 hat Verdichterlaufschaufeln 16, die axial Luft über eine Öffnung 18 in der Stirnwand 20 eines Gehäuses 22 ansaugen und die Luft radial verdichten. Die ringförmige Stirnwand 20 bildet eine Seite des Gehäuses 22, das noch einen hohlzylindrischen Gehäuseabschnitt 24 hat, der u.a. eine Brennkammer 26 einschließt.

Der Turbinenrotor ist fliegend gelagert. Ein Lager 27 der Welle 14 befindet sich in einer Stirnwand eines Gehäuses 28, das mit dem Gehäuse 22 verbunden ist und ein Planetengetriebe 30 als Untersetzungsgetriebe enthält. Das zweite Lager 32 der Welle befindet sich ebenfalls im Gehäuse 28. Die Planeträder des Getriebes sind nicht näher bezeichnet. Ein Glockenrad ist am Ende einer Welle 34 befestigt, die in einem Pumpenblock 36 an zwei Stellen drehbar gelagert ist, die nicht näher bezeichnet sind. Der Pumpenblock 36 enthält eine Ölpumpe 38, deren nicht näher bezeichnetes Pumpenrad von der Welle 34 angetrieben wird. Im Pumpenblock 36 ist im Zuge der Ölleitungen ein Filter 40 angeordnet. Weiterhin befindet sich im Pumpenblock 36 eine Kraftstoffpumpe 42, mit der Kraftstoff der Brennkammer 26 zugeführt wird.

Mit der Welle 34 ist weiterhin der Rotor 44 eines Startergenerators verbunden, an dem noch ein Luftrad 46 befestigt ist. Der Starter 47 des Generators ist an einem Flansch 48 befestigt, von dem ein Wellenstumpf 50, für den Anschluß von Kraftmaschinen nach außen ragt. Die Ölpumpe 38, die Kraftstoffpumpe 42, das Luftrad 46 und der StarterGenerator werden im folgenden auch als Hilfsaggregat bezeichnet.

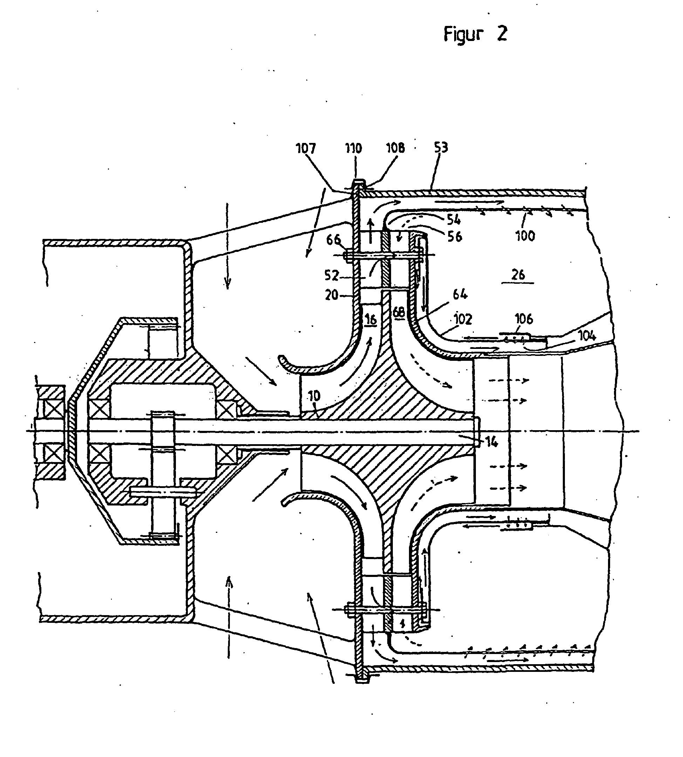

Der Aufbau der Gasturbine und des Verdichters wird im folgenden näher in Verbindung mit Fig. 2 beschrieben:

Radial außen an den Laufschaufeln 10 des Verdichters 10 befinden sich Diffusorschaufeln 52, die die komprimierte Luft einem Kanal 53 zuführen, der die Luft in die Brennkammer leitet. Die Diffusorschaufeln 52 springen von einer Seite einer Platte 54 vor, von deren anderer Seite Leitschaufeln 56 der Turbine ausgehen.

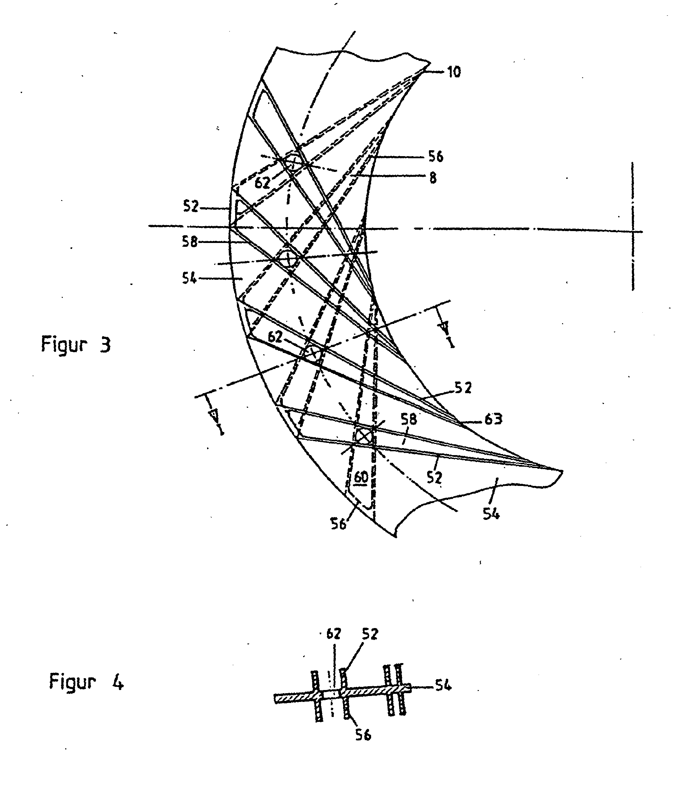

Die Platte 54 trennt somit den Verdichter vom Turbinenteil. Die Diffusorschaufeln 52 enthalten Hohlräume 58, was insbesondere in den Fig. 3 bis 7 dargestellt ist. Auch die Turbinenschaufeln 56 enthalten Kühlkanäle bzw. Hohlräume 60. An denjenigen Stellen der Platte 54, an denen sich auf der einen Seite die Hohlräume 58 der Diffusorschaufeln 52 und auf der anderen Seite die Hohlräume 60 der Leitschaufeln verbinden, sind Kanäle bzw. Öffnungen 62 in der Platte 54 vorhanden, über die die Hohlräume 58, 60 miteinander in Verbindung stehen. Die Leitschaufeln 52 sind an ihren, den Laufschaufeln 16 zugewandten Enden mit Öffnungen 63 versehen, durch die Luft in die Hohlräume 58 eindringt.

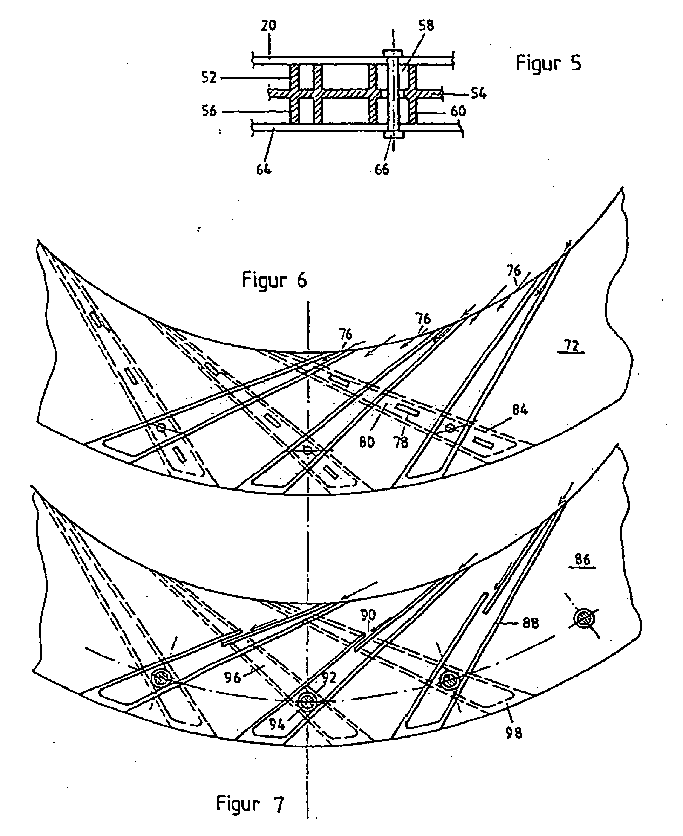

Von dort gelangt die Luft über die Öffnungen 62 in die Hohlräume 60, wodurch die Turbinenleitschaufeln 56 gekühlt werden. Die Fig. 4 zeigt die ringförmige Platte 54 mit den Verdichterleitschaufeln 52, den Turbinenleitschaufeln 56 und den Öffnungen 62 im Querschnitt. Aus den Fig. 2 und 5 ist ersichtlich, wie die Platte 54 in der Gasturbine befestigt ist. In Bohrungen der Stirnwand 20 und in die Öffnungen 62 sowie in Bohrungen einer Gehäusewand 64 eines doppelwandigen Gehäuses innerhalb des Gehäuses 22 sind Bolzen 66 eingesetzt, die die Platte 54 zwischen der Stirnwand 20 und der Gehäusewand 64 halten.

Die Durchmesser der Bolzen 66 füllen die Öffnungen 62 in der Platte 54 nicht aus, so daß durch die verbleibenden freien Stellen noch die Kühlluft in die Hohlräume 60 der Turbinenleitschaufeln 56 eindringen kann. Die Turbinenleitschaufeln 56 haben an ihren, den Turbinenlaufrädern 68 zugewandten schmalen Enden bzw. thermisch kritischen Bereichen ebenfalls Öffnungen 70, durch die die Kühlluft aus den Hohlräumen 60 austritt und die Leitschaufelspitzen kühlt.

In Fig. 6 ist bei einer Platte 72 mit Verdichterleitschaufeln durch Pfeile 76 der Strömungsverlauf deutlich gekennzeichnet. Wenn der Querschnitt neben den Bolzen 66 für den Luftdurchsatz zu gering ist, sind gemäß Fig. 6 Öffnungen 78 in der Platte vorhanden, die auf der der Turbinenseite in Kühlkanal bzw. Hohlräumen 80 der Turbinenleitschaufeln 84 einmünden, wodurch Luft von der Verdichterseite in die hohlen Turbinenleitschaufeln 84 gelangt.

In Fig. 7 ist eine Platte 86 mit Diffusorschaufeln 88 dargestellt, die nicht nur an den Spitzen 90 Schlitze für die Luftzufuhr sondern auch noch zwischen ihren Enden durch Unterbrechung und Versatz der den Laufschaufeln zugewandten Leitschaufelwände Schlitze aufweisen, durch die Kühlluft in die hohlen Leitschaufeln eintritt. Aus den Hohlräumen strömt die Kühlluft durch die ringförmigen Öffnungen 92 zwischen den Befestigungsbolzen 94 in die in Fig. 7 mit 96 bezeichneten Kühlkanäle bzw. Hohlräume von Turbinenleitschaufeln 98.

Der Kanal 53 hat Öffnungen 100, durch die Kühlluft aus dem Kanal in den Brennraum 26 eintritt, so daß die Kanalwände auch auf der Brennraumseite gekühlt werden. Die Wand 64 hat Durchlässe für die Bolzen 66, die einen ringförmigen Spalt zwischen den Bolzen und dem äußeren Durchmesser der Durchlässe frei lassen. Durch diese Spalte strömt Kühlluft in ein inneres doppelwandiges Gehäuse, dessen eine Wand 64 die Nozzle bildet. Die zweite Wand 102 bildet ein Hitzeschild und begrenzt auf ihrer Seite die Brennkammer 26 bzw. schützt die Wand 64. In dieser Wand 102 sind an verschiedenen Stellen kleine düsenförmige Öffnungen 104 vorhanden, durch die die Kühlluft in die Brennkammer 26 gelangt und dabei die Wand 102 auch von der Brennkammerseite aus kühlt.

Über den Öffnungen 104 bzw. einer Gruppe solcher Öffnungen können Umlenkplatten 106 in der Brennkammer angeordnet sein. Diese Umlenkbleche 106 leiten die Kühlluft längs der Wand 102, wodurch die Kühlung verstärkt wird. Die Platte 54 mit den Leitschaufeln kann aus Keramik bestehen.

Die oben beschriebene Ausbildung der Gasturbine ermöglicht die Bereitstellung eines kompakten autarken, modulartigen Gasturbinenaggregats, das mit einer Vielzahl von Betriebsstoffen - flüssig oder gasförmig - betrieben werden kann.

Es wird dabei ein autarkes modulmäßig aufgebautes System zur Verfügung gestellt, welches nachfolgend beschriebene Charakteristiken aufweist und mit einer Vielzahl von Betriebsstoffen - flüssig oder gasförmig (Biogas/Umwelt) - betrieben werden kann.Bei der oben erläuterten Nebenstrom-Gasturbine wird der Luftstrom im Diffusor gesplittet und zwar so, daß z.B. mittels düsenförmigen Öffnungen im Diffusor die vom Verdichter herrührende Gasströmung durch die auf gegenüberliegenden Seite der Diffusorplatte 54 befindliche Turbinenstatorschaufeln 56 preßt und somit eine extreme Kühlung dieser Schaufeln stattfindet. Teilweise wird örtlich diese Luft auch dazu benutzt, um an besonderes kritische Heißzonen der Statorblätter etwas von dieser Luft austreten zu lassen, um eine Filmkühlung und/oder Schwitzkühlung der Statorblätter zu schaffen. Da die Diffusorplatte 54 als Träger der Verdichterleitschaufeln 52 und der Turbinenleitschaufeln 56 dient und somit als Trennglied zwischen Kalt- und Heißteil fungiert, werden die Turbinenleitschaufeln 56 auch sehr effektiv durch eine Konvektionskühlung vor Überhitzung geschützt.

Außerdem entsteht ein sehr einfach und kostengünstig herstellbares und leicht bearbeitbares Werkstück, welches sich sogar billigst und einfach in Keramik herstellen läßt.

Das Frischgas kühlt - nachdem es die Leitschaufeln durchströmt hat - auch das Gehäuse/Nozzle, welches das Turbinenrad umgibt, in dem das Hitzeschild 102 die Nozzle vor der direkten Beaufschlagung des von der Brennkammer austretenden Heißgases schützt.

Man kann auch sagen, daß dieses Hitzeschild 102 schon einen Teil der Brennkammer darstellt und von einer Seite zwangsmäßig gekühlt wird, weil das durch die Leitschaufeln gepreßte Frischgas mittels axialer Öffnungen in der Nozzle in den Hohlraum gelangt, welcher zwischen Nozzle und Hitzeschild vorhanden ist. Im Bereich des Nozzleendes befinden sich kleine radiale Öffnungen im Hitzeschild/Brennkammer. Diese dienen dem Zweck der weiteren Kühlung dieses Hitzeschildes 102, in dem das Frischgas mittels einer in einem geringen Abstand über den Öffnungen plazierte Schürze die Strömung umlenkt und sich nun ein Kühlfilm über die andere Seite des Hitzeschildes 102 legt, bis hin zum Eintritt in den Turbinenleitschaufelring.

Der Kühlluftstrom wird also im vollen Umfang der Brennkammer 26 zugeführt und geht nicht verloren. Er erwärmt sich kontinuierlich auf dem Wege bis hin zur Brennkammer 26, was wiederum eine Gesamtwirkungsgradverbesserung zur Folge hat.

Die oben erwärmten axialen Öffnungen in der Nozzle sind vorzugsweise so plaziert, daß sie mit den axialen Öffnungen in der Diffusorplatte 54 und dem Verdichtereinlaufgehäuse auf dem gleichen Teilkreis liegen. Somit ergibt sich die Möglichkeit, das gesamte Paket (Verdichtereinlaufgehäuse, Diffusorplatte 54, Nozzle, Hitzeschild 102) miteinander zu verspannen.

Damit die rotierenden Teile ebenfalls höheren Belastungen standhalten, ist nun das Verdichter- und Turbinenlaufrad 10, 12 aus einem einzigen Werkstück (Rohling) hergestellt und die Lagerbasis dieses Rotors so konstruktiv ausgelegt, daß diese sich außerhalb des Heißteil befindet, d.h. Richtung Antriebsseite. Der Rotor wird am Umfang zwischen Verdichter und Turbine, d.h. zwischen dem radialen äußeren Rand des Rotors und der Diffusorplatte 54 labyrinthähnlich abgedichtet, so daß nur geringfügige Frischgasverluste in Richtung Heißteil zu erwarten sind, diese aber dort die Blattspitzen beaufschlagen und somit wiederum der Kühlung dienlich sind.

Der Rotor ist so gestaltet, daß die Turbinenschaufeln teilweise hohl sind bzw. Kanäle aufweisen und Frischgas von der Verdichterseite durch die Blattschaufeln der Turbinenseite gegen die Innenwand der diese umgebende Nozzle strömen kann.
Auch können Öffnungen vorgesehen sein, welche die Turbinenschaufeln mit einer Film- und/oder Schwitzkühlung versehen.

Die Stirnwand 20 und das Gehäuse an einem abgewinkelten Ende, das an die Stirnwand an deren äußeren Rand angelehnt ist, bilden einen Bund bzw. Wülste 107, 108, die durch ein V-Profil-Spannband 110 (Quick-Disconnect-Verbindung) miteinander verbunden sind. Die Verbindung kann bei Bedarf, z.B. bei Inspektions- und Wartungsarbeiten sehr schnell gelöst werden, so daß die Sicht auf die verdichter- und turbinenseitigen Schaufeln freigegeben wird. Das nachgeschaltete Untersetzungsgetriebe sorgt für das gewünschte Drehmoment (vorzugsweise Planetengetriebe). Das Sonnenrad des Planeten ist bereits auf der Rotorwelle 14, somit erübrigen sich zusätzliche Lagerstellen, d.h. Turbinenrotor und Planet kommt mit insgesamt zwei Lagerstellen für den schnellen und daher kritischen Bereich aus.

Es erübrigt sich somit auch ein Verbindungsstück (Quirlschaft bzw. Knochen).

Über schräg verzahnte Planetenräder können Axialkräfte, welche aus dem Rotorgetriebe resultieren, weitestgehend kompensiert werden, in dem sie entweder von dem Planetenträger oder der Lagerbasis des Glockenrades aufgenommen werden, je nach Ausgestaltung des Planetengetriebes.

Das Aggregat hebt sich auch in seiner weiteren Ausgestaltung von herkömmlich bekannten Systemen ab, weil z.B. keine weiteren Zahnräder und Getriebe für Accessories vorhanden sind.

Was die Herstellungskosten, das Gewicht und das Volumen senkt und gleichzeitig die Zuverlässigkeit, Wirtschaftlichkest erheblich verbessert, wurde dadurch ermöglicht, indem auf die Welle 34 des Glockenrades (= Abtriebswelle) die Ölpumpe für die Schmierung und ferner eine Pumpe für die Zuverfügungstellung der Kraftstoffmenge und des benötigten Druckes integriert wurden (Öl- und Kraftstoffilter wurden ebenfalls direkt in diesem Gehäuse untergebracht).

Gleichermaßen befindet sich auf der Abtriebswelle der Starter und Generator bzw. Startergenerator, welcher sowohl als Gleichstrom wie auch als Wechsel/Drehstromvariante ausgebildet sein kann. In dem die Welle umgebenden Gehäusehals befindet sich auch das Kühlgebläse, welches ebenfalls mit der Abtriebswelle in Verbindung steht und nicht nur den elektrischen Part der Anlage kühlt, sondern auch das verrippte Getriebegehäuse/Öl durch die entsprechend angeordnete Luftführung. Auf einen zusätzlichen Ölkühler kann somit verzichtet werden. Bei extremen Lastfällen wird dieser dem Gebläse strömungsmäßig nachgeschaltet.

Bei den erfindungsgemäßen Gasturbinen kann auf schwere Gehäuse und Vorrichtungen für Kraftstoffpumpe, Ölpumpe, Anlasser, Generator, Kühlgebläse und sonstige Accessories verzichtet werden, d.h., daß nur zwei Lager insgesamt für alle diese Baugruppen inkl. der Abtriebswelle nötig sind.

Durch die Erfindung ist es nun möglich, ein Antriebsaggregat zur Verfügung zu stellen, welches z.B. bei einer Leistung von 150 KW nur ein Gewicht von ca. 20 kg aufweist, mit geringerer Kraftstoffmenge auskommt und somit einen höheren Wirkungsgrad aufweist. Die Wartungs- und Inspektionsintervalle werden reduziert und die Zuverlässigkeit gesteigert.

Das Turbinenpaket/Modul ist so handlich und leicht, daß auf eine Verbindung mittels z.B. Stehbolzen zwischen Turbine und den wahlweise nachgeschalteten diversen austauschbaren anzutreibenden Aggregaten verzichtet werden kann.Der Flansch 48, der das Getriebegehäuse zur Seite der anzuschließenden Maschinen oder Geräte abschließt, weist an seinem äußeren Rand einen Bund 112 auf, der in Verbindung mit einem entsprechenden Bund des jeweils anzuschließenden Gerätes zum Anlegen eines V-Profil-Spannbandes geeignet ist. Eine solche Quick-Disconnect-Verbindung erlaubt die Verbindung und Lösung der Gasturbineneinheit mit Maschinen wie Pumpen, Generatoren, Fahrzeugen, Hubschraubern, Motorbooten oder Baumaschinen.

Es steht demnach ein Antriebssystem zur Verfügung, welches prädestiniert ist zum vielseitigen Einsatz (Polizei, Katastrophenschutz, Feuerwehr, Flughäfen, Automobilhersteller, Flugzeuge- und Hubschrauberhersteller, Klimaaggregatehersteller etc.).

Das gleiche Aggregat kann z.B. erst als Antriebssystem in einem Fahrzeug (Jeep) und danach z.B. als Antrieb für eine Feuerlöschpumpe etc. benutzt werden.Für die Zurverfügungstellung von elektrischer Energie für z.B. die Flugzeugbordstromversorgung 400 Hz können autarke Energiepakete zur Verfügung gestellt werden, welche mit der oben beschriebenen Schellenverbindung mit der Turbine verbunden werden können.

Diese Gasturbinenaggregate bzw. Energiepakete wie auch sämtliche anderen Aggregate können auch an einen Elektromotor oder an das MGU-System (Dieselmotor/Elektromotor oder auch Ottomotor) angehängt werden. Das Energiepaket mit elektrischer Maschine weist darüber hinaus noch folgende nicht zwingende Merkmale auf:
integrierte Kühlung, integrierte Spannungsregelung, integrierter Überlastschutz, integrierte Lastschaltkontakte, wie z.B. 3-Phasenrelais, integrierte Instrumentierung, welche wahlweise abgenommen und mittels Verbindungskabel auch als Fernbedienung verwendet werden kann, integrierte Unter-/Überspannung, integrierte Unter-/Überfrequenz. Gewicht eines 90 KVA, 400 Hz Energiepaktes für Flugzeuge etc. ca. 55 kg.

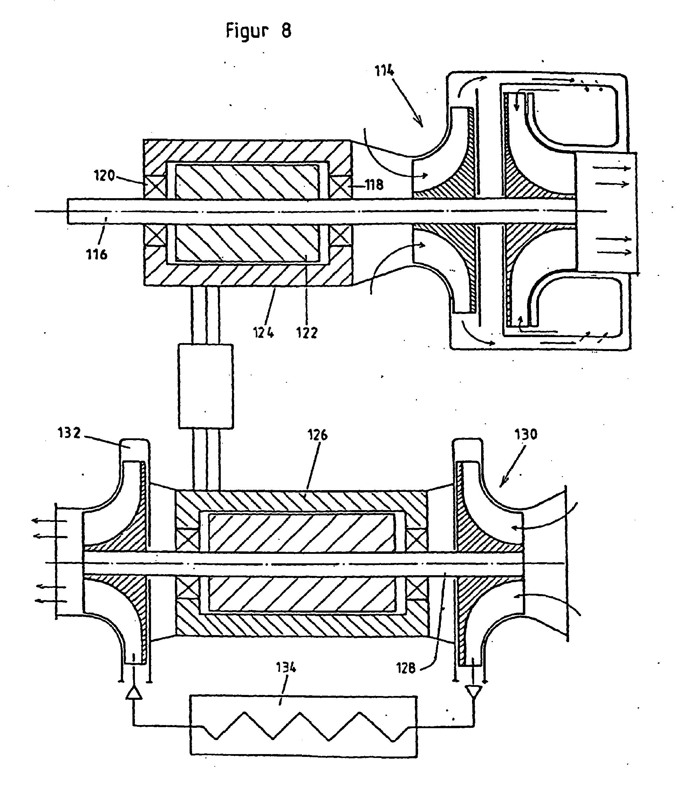

Die Fig. 8 zeigt eine Gasturbineneinheit 114, die in bezug auf die Verdichter- und Turbinenstufe den in den Fig. 1 bis 7 dargestellten Aufbau hat, jedoch auf ihrer Turbinenwelle 116, die nur zwei Lagerstellen 118, 120 hat, den Läufer 122 einer elektrischen Maschine 124 trägt. Diese Maschine 124 arbeitet als Generator, der Strom einem elektrischen Motor 126 zuführt, dessen Rotorwelle 128 an ihren Enden jeweils einen Verdichter 130 und eine Turbine 132 trägt. Der Verdichter 130 komprimiert Luft, die über einen Wärmetauscher 134 der Turbine 132 zugeführt wird, in der sich die Luft entspannt.

Die Vorrichtung gemäß Fig. 8 dient zur Erzeugung konditionierter Luft, z.B. Kühlluft.

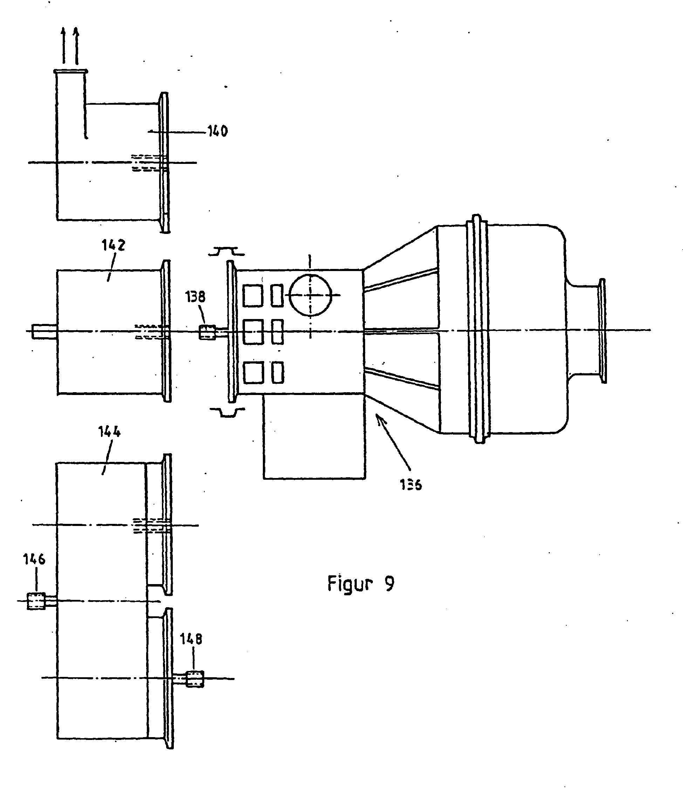

Die Fig. 9 zeigt ein Gasturbinenaggregat 136 mit dem in Zusammenhang mit den Fig. 1 bis 7 beschriebenen Aufbau. Die Abtriebswelle 138 kann wahlweise mit einem Energiewandler 140, einem stufenlosen Getriebe 142 oder einem Verteilergetriebe mit wenigstens zwei Ausgangswellen 146, 148 verbunden werden, ohne daß hierdurch eine Einschränkung der Erfindung erfolgen soll. Vielmehr werden rein beispielhaft Anwendungsfälle der erfindungsgemäßen Lehre aufgezeigt.

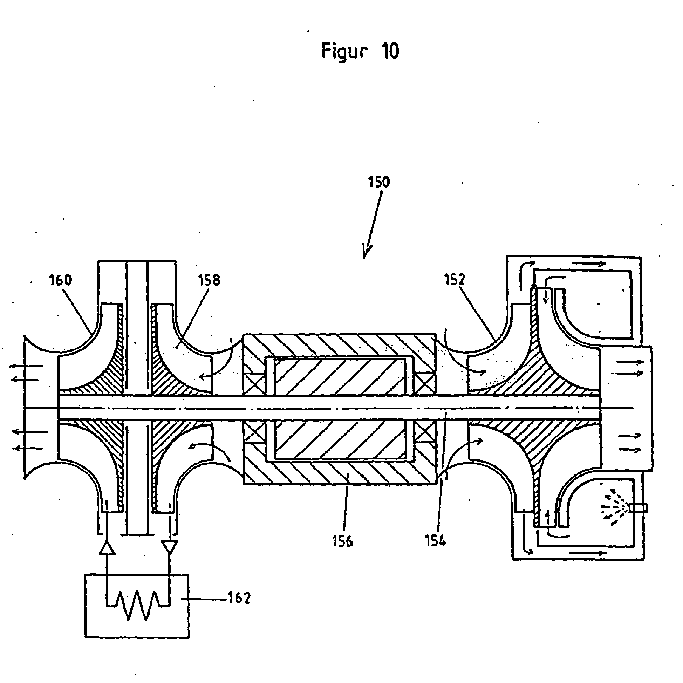

In Fig. 10 ist eine Kleingasturbine 150 (Leistungsbereich 3 - 300 KW) dargestellt, mit der keimfreie, konditionierte Luft erzeugt werden kann, die z.B. zum Kühlen oder Heizen verwendet wird. Die Kleingasturbine 150 enthält eine Verdichter-Turbineneinheit 152, wie sie oben im Zusammenhang mit Fig. 1 bis 7 beschrieben wurde oder eine sonstige bekannte bzw. konventionelle Verdichter-Turbinenanordnung bzw. eine Anordnung, bei der der Rotor mit den Verdichter- und Turbinenlaufschaufeln nicht einstückig ausgebildet ist.

Auf der Turbinenwelle 154 sitzt der Rotor einer elektrischen Maschine 156. Auf dem zweiten Ende der Rotorwelle 154 ist ein Verdichter 158 und eine Turbine 160 angeordnet. Die vom Verdichter 158 komprimierte Luft wird über einen Wärmetauscher 162 geleitet und gelangt anschließend in die Turbine 160. Die Kleingasturbine 150 erzeugt pneumatische und elektrische Energie.

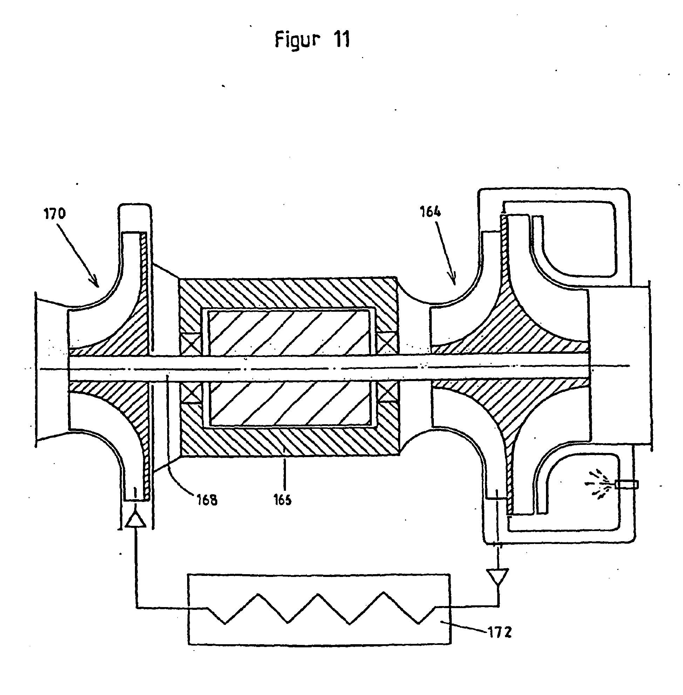

In Fig. 11 ist eine Gasturbineneinheit 164 mit einer elektrischen Maschine 166 versehen. Auf dem einen Ende der Turbinenwelle 168 ist eine Turbine 170 mit ihrem Laufrad fliegend gelagert. Der Turbine 170 wird Zapfluft aus der Verdichterstufe der Gasturbine über einen Wärmetauscher 172 zugeführt. Die Vorrichtung gemäß Fig. 11 kann elektrische Energie und/oder pneumatische Energie oder konditionierte Luft zum Kühlen oder Heizen erzeugen.

Mit der erfindungsgemäßen Gasturbineneinheit kann ein Hydraulik- und Stromversorgungspaket für die Versorgung von diversen Hubschraubern bereitgestellt werden. Weiterhin kann die erfindungsgemäße Gasturbineneinheit mit einem Turbokompressor ein Turbokompressorpaket für die Erzeugung von Startluft bilden.

Eine weitere Anwendungsmöglichkeit ist die Verbindung der erfindungsgemäßen Gasturbine mit einem Hochdruckkompressor für pneumatische Werkzeuge, Druckauffüllen von Fahrzeugzylindern, Druckspeichern, Pressluftflaschen etc. Ferner kann die erfindungsgemäße Gasturbine eine Löschpumpe für Feuerwehr oder Trinkwasserversorgung antreiben.

Die Fig. 10 und 11 zeigen Turbokompressorpakete für die Erzeugung konditionierter Luft und gegebenenfalls elektrischer Energie.

Die erfindungsgemäße Gasturbineneinheit kann eine Wasserstrahlpumpe für Bootsantriebe und zur Absaugung von Ölteppichen bei Tankerunfällen antreiben.

Weiterhin kann eine zusätzliche Warmwasserversorgung mittels Wärmetauscher im Abgasstrom zur Verfügung gestellt werden.

Die angetriebenen elektrischen Maschinen dienen der elektrischen Energieversorgung 50/60 Hz.

Die erfindungsgemäße Gasturbine kann auch als Energiepaket für Flugzeugantriebe verwendet werden, mit einem Reduktionsgetriebe und einem Propeller z.B. einer Mantelschraube.

Dieses Paket kann konventionell mit der Zelle eines Luftfahrzeuges verbunden sein. Das Antriebsaggregat besteht aus der erfindungsgemäßen Turbine mit Quick-Disconnect-Verbindung (V-Schelle). Bei einem Triebwerkwechsel sind nur wenige Handgriffe notwendig. Gleichermaßen zutreffend ist dies auch für Hubschrauber.

Für den Einsatz in der Automobilindustrie, z.B. Lkw, ist das System mit einem autarken stufenlosen Getriebe, z.B. nach dem PIV- oder van Domen-Prinzip versehen. Die Einheit kann auch dort eingesetzt werden, wo große bzw. wechselnde Drehmomente häufig vorkommen: Flugzeugschlepper, Traktoren, Baumaschinen.

Die oben beschriebenen Gasturbinen arbeiten stufenlos, pulsationsfrei und können öl- und keimfreie, heiße oder kalte Luft sowie Strom liefern. Betrieben werden können sie mit Brennstoffen wie Diesel, Benzin, Naturgas, Biogas, Alkohol, Wasserstoff und Gemischen. Diese Turbinen kommen mit nur zwei Lagerstellen aus. Die Achs- und Radialkräfte können weitestgehend ausgeglichen werden. Das Turbinensystem besteht auf der einen Seite z.B. aus einer Gasturbine der vorher beschriebenen Art, wobei das Turbinenrad aber auch eine Axialstufe sein kann. Die Rotorwelle mündet auf der Austrittsseite nicht in ein Planetengetriebe, sondern trägt zumindest ein Turbinenrad wie Gehäuse. Diesem Turbinenrad wird über einen Wärmetauscher Zapfluft aus der verdichterseitigen Antriebsturbine zugeführt, wo sie entspannt und durch entsprechende Regelungsmaßnahmen die gewünschte konditionierte Luft liefert (Fig. 11). Eine solche Anordnung ist besonders hervorzuheben.

Eine andere Ausführungsform besteht aus einem Verdichter- und einem Turbinenrad, welche beide ebenfalls auf der Rotorwelle sitzen. Anstelle der Zapfluft erzeugt hier die separate Verdichterstufe den Luftdurchsatz, welcher in der beschriebenen Weise am Turbinenrad Arbeit leistet und entspannt (Fig. 10). Diese Variante hat den Vorteil, daß ohne Leistungsverluste auf der Antriebsseite/Turbine der anzusaugenden Luft ein Filter vorgeschaltet werden kann und die Luft auch nicht mit dem Verbrennungsgas der Antriebsturbine in Berührung kommt. Die beiden einzigen Lagerstellen dieses Aggregates können mit Fettkammern versehen sein oder eine Ölschmierung erhalten.

Der Starter der Anlage bzw. der Generator befindet sich zwischen den beiden Lagerstellen. Vorzugsweise besteht dieser Motor/Generator aus einem Kurzschlußläufer oder mit permanentmagnetbestücklem Rotor und einer entsprechenden Feldwicklung. Im Betrieb können von dieser Stromquelle elektrische Geräte betrieben werden und z.B. die Starterbatterien neu aufgeladen werden.

Das Turbinenrad auf der Frischgasseite kann auch als Axialstufe ausgeführt sein. Bei der Verwendung eines Verdichter/Turbinenrades aus einem Guß besteht möglicherweise ein kleiner Vorteil, welcher bei den Maßnahmen, die für die Eliminierung von Eisbildung herangezogen werden, unterstützend wirkt.Die in Fig. 8 dargestellte Gasturbine treibt ohne Zwischengetriebe einen Stromerzeuger an. Die beiden Lagerstellen des Stromerzeugers sind auch gleichzeitig die Lagerbasis des Turbinenrotors - eine Welle. Die erzeugte Wechsel-/Drehstromspannung wird herangezogen für den Betrieb einer Kühlanlage.

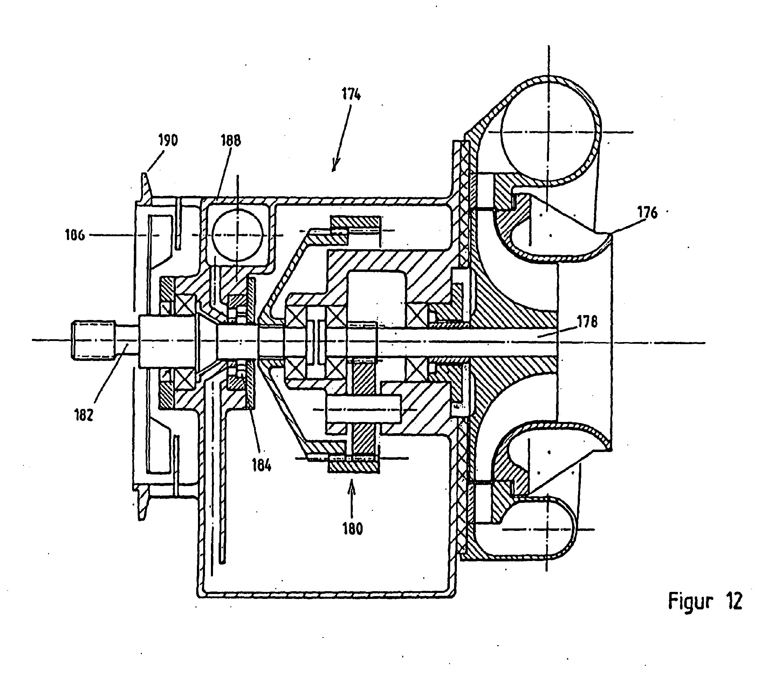

Die Fig. 12 zeigt ein Turbokompressoraggregat 174, das für den Antrieb durch Diesel-, Otto-, Elektromotor oder durch die oben beschriebene Gasturbineneinheit geeignet ist. Das Turbokompressoraggregat 174 weist eine Turbokompressoreinheit 176 auf, die fliegend auf einer Welle 178 gelagert ist, die zwei nicht näher bezeichnete Lager enthält. Zwischen den beiden Lagern ist ein Planetengetriebe 180 angeordnet, dessen Glockenrad auf einer Welle 182 sitzt, mit der eine Pumpe 184 und ein Lüfter 186 verbunden ist.

Das Gehäuse 188, in dem sich das Planetengetriebe 180, die Pumpe 184 und der Lüfter 186 befinden, hat einen Bund bzw. Wulst 190 zum Anschluß mittels V-Profil-Spannband an die Antriebsmaschine.

Das Turbokompressoraggregat 174 kann als Airport-Back-Up-System und als Universalgerät für technische Hilfsdienste eingesetzt werden. Weiterhin ist ein Einsatz in Fahrzeugen, Baumaschinen, Hubschraubern und Flugzeugen etc. möglich.

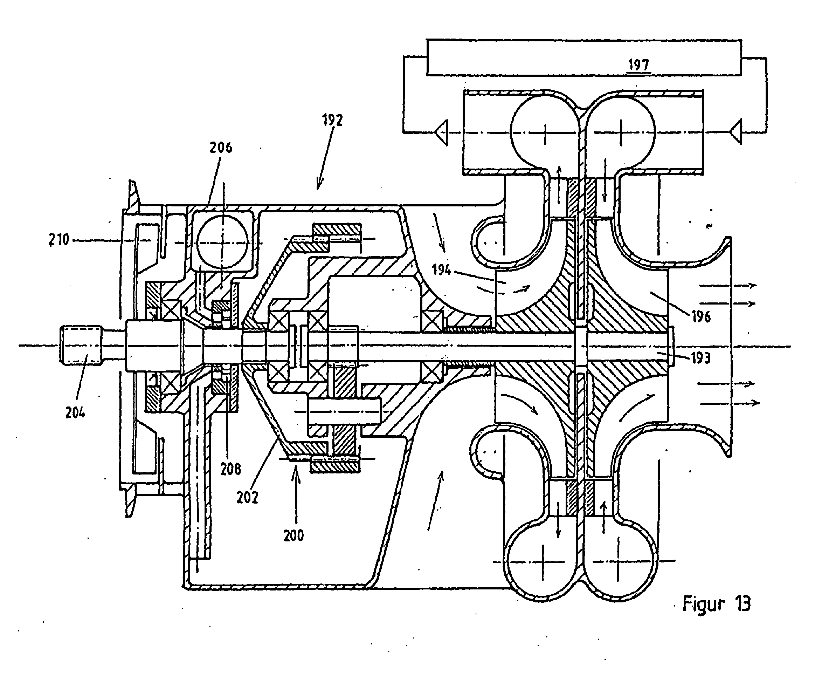

Die Fig. 13 zeigt ein besonders hervorzuhebendes und damit eigenerfinderisches Aggregat 192, das für Airconditioning-Aufgaben bestimmt ist und von den gleichen Maschinen angetrieben werden kann wie das in Fig. 12 dargestellte Turbokompressoraggregat. Eine Einheit aus Verdichter 194 und Turbine 196 is die luftmäßig über einen Wärmetauscher 197 verbunden sind, um konditionierte Luft zu erhalten, sitzt auf einer Welle 198 bzw. ist auf dieser fliegend gelagert.

Mit der Welle 198 ist weiterhin ein Planetengetriebe 200 verbunden, dessen Glockenrad 202 an einem Ende einer Welle 204 angeordnet ist, die für die Verbindung mit der Antriebsmaschine bestimmt ist. Mit der Welle 204 ist im Gehäuse 206 eine Pumpe 208 und ein Ventilator 210 verbunden.

Durch die Erfindung wird ein modulares System verfügbar gemacht, das einzelne Aggregate/Module enthält, die z.B. für die Erzeugung von Strom, Druckluft, klimatisierter Luft bestimmt sind, wobei die Aggregate/Module aufgrund einheitlicher Anschlußelemente austauschbar sind. Der Anbau oder Ausbau von Modulen erfordert keine fachkundigen Monteure, weil V-Profil-Spannbänder und einheitliche Wulstabmessungen an den Modulgehäusen vorgesehen sind.

Größere Reparaturen vor Ort entfallen ebenso, weil nur noch Antriebs/Abtriebsaggregate ausgetauscht werden müssen.

Die in den oben beschriebenen Aggregaten verwendeten elektrischen Maschinen bzw. Generatoren sind vollkommen selbstregelnd/autark und enthalten alles, was an Schutz- und Regeleinheiten notwendig ist. Das Kontroll- und Bedienfeld für die Maschinen ist so ausgebildet, daß es auch mittels eines Kabelbaums/Verlängerungskabels mit Endsteckern zur Fernbedienung benutzt werden kann. Griffe am oberen Ende der Gehäuse, welche die Einheiten umgeben und vollständig mit der generatoreigenen Luftkühlung durchflutet werden, erleichtern das Halten während des Montierens der V-Schelle und das Tragen.

Ähnlich wie das Generatoraggregat sieht auch ein Airstartmodul aus. Die Airstart-Einheit ist vollkommen gekapselt, verfügt über nur zwei Lagerstellen für den schnelllaufenden Teil. Außer dem Planetengetriebe gibt es keine weiteren Wellen oder Zahnräder. Die Ölpumpe ist auf der Antriebswelle integriert, ebenso das Kühlgebläse. Ölfilter, Ölvorrat, Ölkühler, Öldruckregelung sind im Gehäuse integriert. Die Ritzelwelle des Sonnenrades trägt gleichzeitig den Verdichterrotor 1- oder mehrstufig. Sitzt ein Turbinenrad ebenfalls auf der hierfür verlängerten gemeinsamen Welle is kann das Modul als Klimaanlage arbeiten wie bereits erwähnt.

Geräte bzw. Aggregate der oben beschriebenen Art können in Kraftfahrzeugen eingesetzt werden, weil das jeweilige Aggregat unabhängig vom Hauptantrieb des Fahrzeuges arbeiten und außerdem bei Pannen nützliche Dienste leisten kann. Hierbei kann elektrische und pneumatische Energie erzeugt werden. Die oben beschriebenen Turbinen sind so konstruiert, daß diverse Teile aus Keramikwerkstoffen und andere Teile aus Kohlefasermaterialien hergestellt sind.

Die Startergeneratoren haben ein sehr hohes Anzugs-/Drehmoment, welches sich schon aus dem großen Durchmesser des Rotors ergibt, damit die Turbine in kürzester Zeit von Null auf Betriebsdrehzahl gebracht werden kann. Dies ist sehr wichtig im Fahrzeugbau und dort wo die Drehmomentkennlinie des Anbaumoduls dies erfordert. Der Lüfter kann nicht nur zur Kühlung des Ölkreislaufs herangezogen werden.

Selbstverständlich ist die erfindungsgemäße Lehre nicht an eine bestimmte interne technische Ausführungsform einer Gasturbine gebunden. Gegenstand sind Pumpe, Generator, stufenloses Getriebe etc.. Diese sind in zwei Punkten identisch, indem sie erstens auf die Charakteristik eines bestimmten Antriebsmoduls ausgerichtet sind, nämlich auf Flanschbild, Schnellverbindung, An-/Abtriebswelle, Drehzahl etc. und zweitens die Elemente autark sind. Das Antriebsmodul besteht aus drei möglichen Varianten mit ebenfalls drei identischen Flanschbildern etc.. Für Gruppen wie THW ist eine Kleingasturbine vorgesehen, für einen ortsgebundenen Einsatz ein Diesel-/Benzinmotor, für den mehr stationären Einsatz ein Elektromotor. Das Ganze nennt sich zum Beispiel Airport-Back-Up-System oder universales Energieträgersystem.

Auch ist darauf hinzuweisen, daß Leitschaufelplatte, einstückiger Rotor etc. nicht zwingend sind. Wichtig ist vielmehr, daß keine unnötigen Zahnräder, Lagerstellen oder sonstige mechanische Bauteile integriert sein müssen. Daher ist es nach der erfindungsgemäßen Lehre möglich, u.a. alle Gehäuseteile aus Dreh- und Frästeilen herzustellen, da die Bauweise auf einer konzentrischen bzw. koaxialen Konstruktion des gesamten Aggregates basiert.

Durch die erwähnte Bauweise ergeben sich weitere Vorteile wie einfache und preiswerte Herstellung der Gehäuse aus zum Beispiel Kohlefasermaterialien (Wickelverfahren), geringe Modellkosten, sehr gute aerodynamische Werte, zylindrischer Körper ohne abstehende Anbau- bzw. Hilfsaggregate.

## Patentansprüche

1. Anordnung zum Konditionieren von Luft umfassend eine erste Turbine sowie einen ersten Verdichter, die von einer gemeinsamen ersten Welle (154, 168) ausgehen,
wobei der Rotor des ersten Verdichters und das Laufrad der ersten Turbine nebeneinander auf derselben Welle (154, 168) angeordnet sind,
wobei der Verdichter über einen Wärmetauscher (162, 172) mit einer auf der Welle angeordneten zweiten Turbine (170) verbunden ist oder auf der ersten Welle ein zweiter Verdichter (158) und eine weitere Turbine (160) angeordnet sind, wobei der erste Verdichter mit der zweiten Turbine oder der zweite Verdichter mit der weiteren Turbine über einen Wärmetauscher (162, 172) verbunden sind. **dadurch gekennzeichnet,**
**dass** auf der Welle ein Generator (156, 166) angeordnet ist, dass die aus der ersten Turbine, dem ersten Verdichter und dem Generator be- stehende Einheit ausschließlich über zwei Lagerstellen gelagert ist und dass der Generator als Starter der Anordnung verwendbar ist.

2. Anordnung nach Anspruch 1,
**dadurch gekennzeichnet,**
**dass** der zweiten Turbine (170) Zapfluft der aus dem ersten Verdichter und der ersten Turbine bestehenden Anordnung (152) zuführbar ist.

3. Anordnung nach Anspruch 1,
**dadurch gekennzeichnet,**
**dass** das Laufrad (160) der weiteren Turbine (160) und der Rotor des zweiten Verdichters (158) aus einem einzigen Teil bestehen.

4. Anordnung nach Anspruch 1,
**dadurch gekennzeichnet,**
**dass** verdichtete Luft des ersten Verdichters über einen Wärmetauscher (197) der ersten Turbine zuführbar ist und
**dass** die erste Welle über ein Untersetzungsgetriebe (200) mit einer weiteren antreibbaren Welle (204) verbunden ist (Fig. 13).

5. Anordnung nach Anspruch 4,
**dadurch gekennzeichnet,**
**dass** das Untersetzungsgetriebe (200) ein Planetengetriebe (200) ist, von dessen Glockenrad (202) die weitere Welle (204 ausgeht, mit der eine Pumpe (208) md/oder ein Ventilator (210) verbindbar ist, wobei die weitere Welle gleichachsig mit der ersten Welle verläuft.

6. Anordnung nach Anspruch 4 oder 5,
**dadurch gekennzeichnet,**
**dass** die weitere Welle (204) über einen Diesel-, Otto- oder Elektro-Motor oder eine Gasturbineneinheit nach zumindest einem der vorergehenden Anspruche antreibbar ist.

## Claims

1. Arrangement for air conditioning comprising a first turbine as well as a first compressor, both originating from a joint first shaft (154, 168),
whereas the rotor of the first compressor and the blade wheel of the first turbine are arranged side by side on the same shaft (154, 168),
whereas the compressor is connected via a heat exchanger (162, 172) to a second turbine (170) arranged on the shaft or a second compressor (158) and a second turbine (160) are arranged on the first shaft, with the first compressor being connected via a heat exchanger (162, 172) to the second turbine or the second compressor to the further turbine,
**characterized in**
**that** a generator (156, 168) is arranged on the shaft,
**that** the unit consisting of the first turbine, the first compressor and the generator is supported exclusively via two bearings and
**that** the generator can be used as starter of the arrangement.

2. Arrangement according to claim 1,
**characterized in**
**that** bleed air of the arrangement (152) consisting of the first compressor and the first turbine can be supplied to the second turbine (170).

3. Arrangement according to claim 1,
**characterized in**
**that** the blade wheel (160) of the further turbine (160) and the rotor of the second compressor (158) consist of one single piece.

4. Arrangement according to claim 1,
**characterized in**
**that** compressed air of the first compressor can be supplied via a heat exchanger (197) to the first turbine and
**that** the first shaft is connected via a reducing gear (200) to a further drivable shaft (204) (Fig. 13).

5. Arrangement according to claim 4,
**characterized in**
**that** the reducing gear (200) is a planet gear (200) from the bell-shaped wheel (202) of which the further shaft (204) originates, with a pump (208) and/or a fan (210) being connectable to said shaft, whereas the further shaft runs coaxially with the first shaft.

6. Arrangement according to claim 4 or 5,
**characterized in**
**that** the further shaft (204) can be driven according to at least one of the previous claims via a diesel engine, otto engine or electric motor or a gas turbine unit.

## Revendications

1. Système de conditionnement d'air comprenant une première turbine ainsi qu'un premier compresseur qui sortent d'un arbre commun (154, 158), sachant que le rotor du premier compresseur et le rotor de la première turbine sont disposés côte à côte sur le même arbre (154, 168), que le compresseur est relié par l'intermédiaire d'un échangeur thermique (162, 172) à une deuxième turbine (170) disposée sur l'arbre, ou qu'un deuxième compresseur (158) et une turbine supplémentaire (160) sont disposés sur le premier arbre, et que par l'intermédiaire d'un échangeur thermique (162, 172), le premier compresseur est relié à la deuxième turbine ou le deuxième compresseur est relié à la turbine supplémentaire,
**caractérisé en ce**
**qu'**un générateur (156, 166) est disposé sur l'arbre, que l'unité constituée par la première turbine, le premier compresseur et le générateur est logée exclusivement par deux paliers et que le générateur peut être utilisé comme démarreur du système.

2. Système selon la revendication 1,
**caractérisé en ce**
**que** de l'air de prélèvement de l'arrangement (152) constitué par le premier compresseur et la première turbine peut être acheminé vers la deuxième turbine (170).

3. Système selon la revendication 1,
**caractérisé en ce**
**que** le rotor (160) de la turbine supplémentaire (160) et le rotor du deuxième compresseur (158) sont constitués d'une seule pièce.

4. Système selon la revendication 1,
**caractérisé en ce**
**que** l'air comprimé du premier compresseur peut être acheminé vers la première turbine par l'intermédiaire d'un échangeur thermique (197) et
**que** le premier arbre est relié à un arbre supplémentaire entraînable (204) par l'intermédiaire d'un démultiplicateur (200) (Fig. 13).

5. Système selon la revendication 4,
**caractérisé en ce**
**que** le démultiplicateur (200) est un engrenage planétaire (200), de la roue en cloche (202) duquel sort l'arbre supplémentaire (204) auquel peut/peuvent être relié(es) une pompe (208) et/ou un ventilateur (210), l'arbre supplémentaire ayant le même axe que le premier arbre.

6. Système selon la revendication 4 ou 5,
**caractérisé en ce**
**que** l'arbre supplémentaire (204) est entraînable par un moteur diesel, à étincelles ou électrique selon au moins l'une des revendications précédentes.
